# EUROPÄISCHE PATENTSCHRIFT

(11) **EP 1 719 575 B1**
(45) Veröffentlichungstag und Bekanntmachung des Hinweises auf die Patenterteilung: **10.06.2009**
(21) Anmeldenummer: 06007651.0
(22) Anmeldetag: 12.04.2006
(51) Int. Cl.: B23Q 5/10, B23Q 5/06, B23Q 1/00

(54) **Werkzeugsystem**
Tool system
Système d'outil

(30) Priorität: 28.04.2005 DE 102005020802
(43) Veröffentlichungstag der Anmeldung: 08.11.2006
(73) Patentinhaber: Traub Drehmaschinen GmbH & Co. KG, 73262 Reichenbach (DE)
(72) Erfinder: Baumann, Ulrich, 73252 Lenningen (DE)
(74) Vertreter: Hoeger, Stellrecht & Partner Patentanwälte

(56) Entgegenhaltungen:
- US-A1- 2003 073 553
- US-A1- 2003 073 554
- US-A1- 2004 169 016

## Beschreibung

Die Erfindung betrifft ein Werkzeugsystem für angetriebene Werkzeuge einer Werkzeugmaschine umfassend einen Werkzeughalter mit einer Werkzeugspindel, welche durch einen elektrischen Spindelantrieb antreibbar ist, mit einem mit dem elektrischen Spindelantrieb gekoppelten elektrischen Generator, der durch einen mechanischen Antriebsstrang zum Antreiben der Werkzeugspindel antreibbar ist.

Aus den Druckschriften US 2003/0073553 A1, US 2003/073554 A1 und US 2004/169016 A1 sind Werkzeugsysteme bekannt, bei welchen in eine werkzeugmaschinenseitige Werkzeugspindel ein Werkzeughalter einsetzbar ist, der seinerseits eine durch einen elektrischen Spindelantrieb antreibbare Werkzeugspindel trägt und einen mit dem elektrischen Spindelantrieb gekoppelten elektrischen Generator aufweist, der durch die werkzeugmaschinenseitige Werkzeugspindel mechanisch antreibbar ist.

Andere bekannte Werkzeugsystem sehen üblicherweise ein mechanisches Getriebe zwischen dem zum Werkzeughalterträger geführten mechanischen Antriebsstrang und der Werkzeugspindel vor.

Ein derartiges mechanisches Getriebe hat einerseits den Nachteil, dass es aufwendige Teile erfordert und andererseits den Nachteil, dass insbesondere das Erzeugen hoher Drehzahlen an der Werkzeugspindel problematisch ist.

Der Erfindung liegt daher die Aufgabe zugrunde, ein Werkzeugsystem der gattungsgemäßen Art derart zu verbessern, dass die Werkzeugspindel in möglichst einfacher und flexibler Art und Weise antreibbar ist.

Diese Aufgabe wird bei einem Werkzeugsystem der eingangs beschriebenen Art erfindungsgemäß dadurch gelöst, dass der Werkzeughalter eine Werkzeughalterbasis mit einem Einsteckzapfen aufweist, welcher in eine Werkzeughalteraufnahme eines eine Vielzahl von Werkzeughalteraufnahmen aufweisenden Trägerkopfes eines dem Werkzeugsystem zugehörigen Werkzeughalterträgers einsteckbar ist und dass sich in der Werkzeughalterbasis und dem Einsteckzapfen eine Basiswelle erstreckt, welche den innerhalb der Werkzeughalterbasis angeordneten Rotor des elektrischen Generators trägt und welche an einem einem Innenraum des Trägerkopfes zugewandten Ende des Einsteckzapfens über eine lösbare mechanische Kupplung von dem zum Werkzeughalterträger geführten, dem Werkzeugsystem zugehörigen mechanischen Antriebsstrang antreibbar ist.

Eine derartige Lösung hat den großen Vorteil, dass damit eine einfache Kopplung zwischen dem elektrischen Generator und dem elektrischen Spindelantrieb möglich ist, die eine Vielzahl von Freiheitsgraden liefert und außerdem noch den Vorteil hat, dass sie hinsichtlich Laufruhe, Lebensdauer, Geräuschentwicklung sowie Erwärmung vorteilhaft ist.

Besonders günstig ist es dabei, wenn der Spindelantrieb mit einer Drehzahl läuft, die sich von der Drehzahl des elektrischen Generators unterscheidet.

Eine derartige Lösung lässt insbesondere die Möglichkeit zu, als Spindelantrieb einen mit hoher Drehzahl laufenden, das heißt bei Drehzahlen über 20.000 U/min, laufenden Spindelantrieb vorzusehen, der von einem wesentlich langsamer drehenden elektrischen Generator angetrieben wird.

Damit besteht keine Notwendigkeit, den mechanischen Antriebsstrang für hohe Drehzahlen auszulegen, sondern der mechanische Antriebsstrang kann für niedrigere Drehzahlen mit höheren Drehmomenten ausgelegt werden, die durch den mechanischen Antriebsstrang in einfacher Weise übertragen werden können, und die hohe Drehzahl lässt sich in einfacher Weise über den geeigneten elektrischen Spindelantrieb, beispielsweise über eine entsprechende Kombination der Polpaare des elektrischen Generators und eines Motors des Spindelantriebs oder über einen hochfrequenten Motor mit einem entsprechenden Umrichter, erreichen.

Hinsichtlich der Anordnung des elektrischen Generators sind die unterschiedlichsten Möglichkeiten denkbar.

So sieht eine vorteilhafte Lösung vor, dass der elektrische Generator in einer Werkzeughalterbasis angeordnet ist und über eine lösbare mechanische Kupplung mit dem zum Werkzeughalterträger geführten mechanischen Antriebsstrang antreibbar ist.

Der Vorteil dieser Lösung ist darin zu sehen, dass der elektrische Generator und der Spindelantrieb eine in dem Werkzeughalter integrierte Einheit bilden, die als solche auswechselbar ist.

Hinsichtlich der Anordnung des Spindelantriebs relativ zur Werkzeugspindel wurden bislang keine näheren Angaben gemacht. So sieht eine vorteilhafte Konstellation vor, dass der Spindelantrieb koaxial zur Werkzeugspindel angeordnet ist.

Darüber hinaus ist es insbesondere hinsichtlich der Laufruhe, der Wartungsfreiheit und der Geräuscharmut zweckmäßig, wenn der Spindelantrieb die Werkzeugspindel getriebefrei antreibt, das heißt, dass in diesem Fall dann auch der Spindelantrieb so ausgelegt ist, dass dessen Drehzahl der der Werkzeugspindel entspricht.

Besonders einfach ist es, wenn der Spindelantrieb die Werkzeugspindel direkt antreibt.

Hinsichtlich der Kompaktheit des Aufbaus ist es zweckmäßig, wenn der Spindelantrieb auf der Werkzeugspindel sitzt und somit die Werkzeugspindel eine Abtriebswelle des Spindelantriebs darstellt.

Ferner ist es günstig, wenn der Spindelantrieb ein für Hochgeschwindigkeitsbearbeitung geeigneter Antrieb für die Werkzeugspindel ist, so dass sich insbesondere für Hochgeschwindigkeitsbearbeitung geeignete Werkzeuge in der Werkzeugspindel einsetzen und entsprechend antreiben lassen.

Um die Vorteile des erfindungsgemäßen Konzepts konsequent ausnützen zu können, ist vorzugsweise vorgesehen, dass der Spindelantrieb und die Werkzeugspindel in einem Werkzeughalterkopf sitzen, der an einer an dem Werkzeughalterträger fixierbaren Werkzeughalterbasis angeordnet ist.

Eine derartige Lösung bietet den Vorteil, dass damit eine einfache Trennung zwischen der Anordnung des Werkzeughalterkopfes und der Werkzeughalterbasis realisierbar ist und beide zueinander in nahezu beliebiger Ausrichtung angeordnet werden können, da keine Rücksicht auf ein mechanisches Getriebe genommen werden muss, welches den Antrieb der Werkzeugspindel über die Werkzeughalterbasis gewährleistet, wie dies beim Stand der Technik der Fall ist.

Noch konsequenter lassen sich die Vorteile des erfindungsgemäßen Konzepts dann ausnutzen, wenn der Werkzeughalterkopf relativ zur Werkzeughalterbasis in unterschiedlicher Ausrichtung positionierbar ist, so dass mit einer Werkzeughalterbasis und einem Werkzeughalterkopf unterschiedliche Ausrichtungen der beiden relativ zueinander durch den Benutzer realisierbar sind.

Dieses Konzept erlaubt somit eine Flexibilität hinsichtlich der Ausrichtung der Werkzeugspindel relativ zur Werkzeughalterbasis, die gegenüber herkömmlichen Werkzeughaltern die Zahl der erforderlichen Werkzeughalter für unterschiedliche Einsatzzwecke erheblich reduziert, da durch Änderung der Positionierung des Werkzeughalterkopfes relativ zur Werkzeughalterbasis eine Vielzahl von bislang unterschiedlichen Werkzeughaltern mit einem einzigen Werkzeugsystem realisierbar ist.

Besonders günstig ist es dabei, wenn der Werkzeughalterkopf mittels eines einstellbaren Verbindungselements an der Werkzeughalterbasis gehalten ist.

Das Verbindungselement kann dabei in unterschiedlichster Art und Weise ausgebildet sein.

Beispielsweise kann das Verbindungselement ein mehrere Positionen zur Montage des Werkzeughalterkopfes vorsehendes Verbindungselement sein, auf welchem somit der Werkzeughalterkopf in den unterschiedlichen Positionen montierbar ist.

Eine besonders zweckmäßige Lösung sieht dabei vor, dass das Verbindungselement ein Gelenk ist, welches zumindest in einem gewissen Bereich eine stufenlose Änderung der Ausrichtung des Werkzeughalterkopfes relativ zu der Werkzeughalterbasis erlaubt.

Allerdings ist das Gelenk dann vorzugsweise so ausgebildet, dass das Gelenk in der jeweiligen Position blockierbar ist, um die Ausrichtung des Werkzeughalterkopfes relativ zur Werkzeughalterbasis definiert Aufrecht zu erhalten.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Schnitt durch ein erstes Ausführungsbeispiel eines erfindungsgemäßen Werkzeugsystems;
- Fig. 2: einen Schnitt längs Linie 2-2 in Fig. 1;
- Fig. 3: einen Schnitt ähnlich Fig. 1 durch ein zweites Ausführungsbeispiel eines Werkzeugsystems;

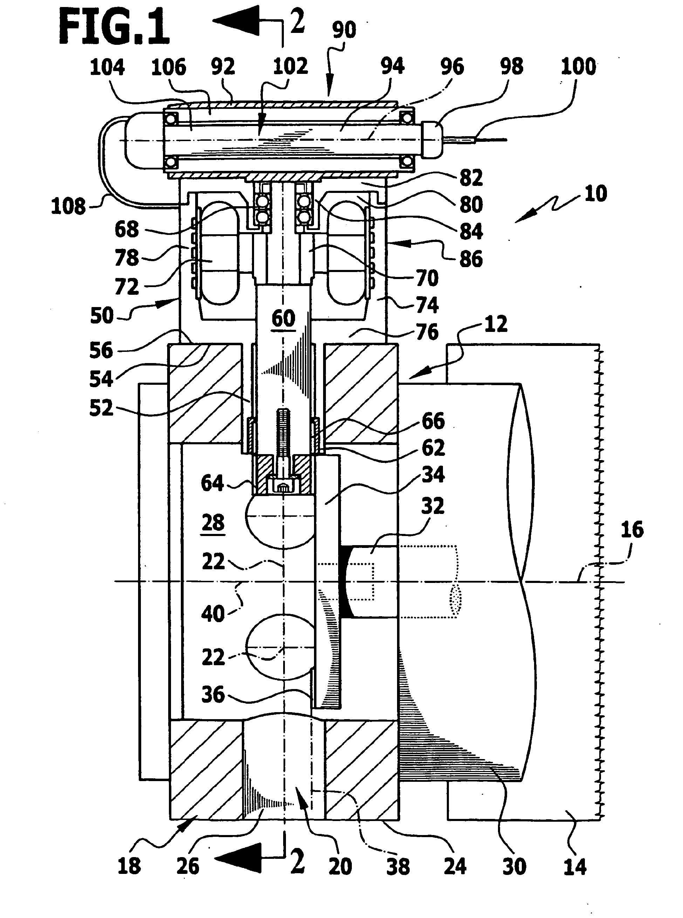

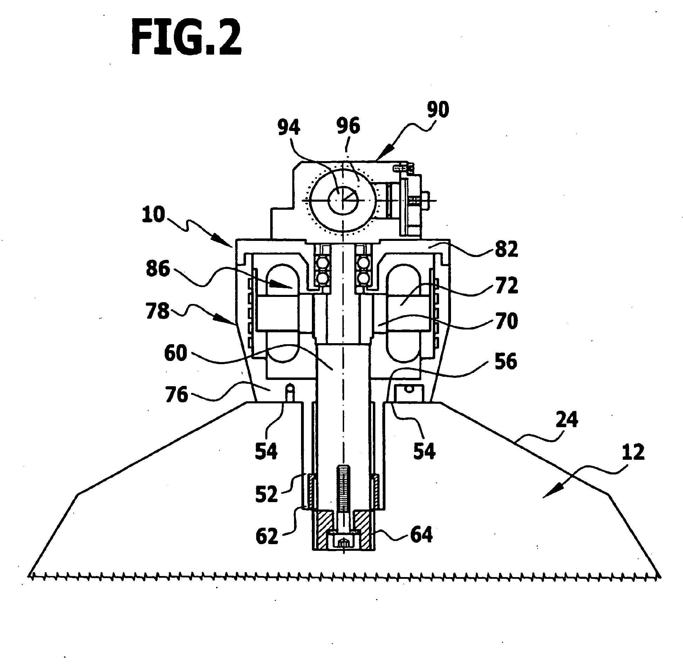

Ein in Fig. 1 und 2 dargestelltes erstes Ausführungsbeispiel eines erfindungsgemäßen Werkzeugsystems für angetriebene Werkzeuge umfasst einen als Ganzes mit 10 bezeichneten Werkzeughalter, welcher an einem als Ganzes mit 12 bezeichneten Werkzeughalterträger montierbar ist.

Der Werkzeughalterträger 12 beim ersten Ausführungsbeispiel des erfindungsgemäßen Werkzeugsystems umfasst vorzugsweise ein Gehäuse 14, an welchem um eine Schwenkachse 16 ein Trägerkopf 18 schwenkbar gehalten ist, welcher um die Schwenkachse 16 herum eine Vielzahl von Werkzeughalteraufnahmen 20 aufweist, deren Mittelachse 22 vorzugsweise radial zur Schwenkachse 16 ausgerichtet ist.

Die Werkzeughalteraufnahmen 20 sind dabei beispielsweise als von Mantelflächen 24 des Trägerkopfs 18 ausgehende und sich in diesen hineinerstreckende Ausnehmungen 26 ausgebildet, welche in einen Innenraum 28 des Trägerkopfes 18 einmünden.

Die Lagerung des Trägerkopfes 18 in dem Gehäuse 14 erfolgt über eine als Ganzes mit 30 bezeichnete Hohlwelle, welche fest mit dem Trägerkopf 18 verbunden ist und vorzugsweise drehbar in dem Gehäuse 14 gelagert ist.

In dieser Hohlwelle ist eine Antriebswelle 32 von dem Gehäuse 14 in den Innenraum 28 des Kopfes geführt und trägt ein Antriebsrad 34 mit einer Verzahnung 36, wobei das Antriebsrad 34 beispielsweise als Kronenrad ausgebildet ist, dessen Verzahnung 36 in einer Ebene 38 liegt, die senkrecht auf einer Drehachse 40 steht, um die sich die Antriebswelle 32 und das Antriebsrad 34 mit der Verzahnung 36 drehen, wobei die Drehachse 40 vorzugsweise noch mit der Schwenkachse 16 zusammenfällt.

Die Fixierung des Werkzeughalters 10 an dem Trägerkopf 18 erfolgt über einen an einer Werkzeughalterbasis 50 vorgesehenen Einsteckzapfen 52, welcher in die Werkzeughalteraufnahme 20 einsteckbar und in dieser fixierbar ist.

Ferner sitzt die Werkzeughalterbasis 50 mit den Einsteckzapfen 52 umgebenden Stützflächen 54 auf die Werkzeughalteraufnahme 20 umgebenden Auflageflächen 56 des Trägerkopfes 18 auf, die durch abgeflachte Bereiche der Mantelfläche 24 gebildet sind.

In der Werkzeughalterbasis 50 und in dem Einsteckzapfen 52 erstreckt sich eine Basiswelle 60, welche ein über den Einsteckzapfen 52 an seinem dem Innenraum 58 zugewandten Ende 62 überstehendes Antriebsritzel 64 trägt, welches bei in die Werkzeughalteraufnahme 20 eingesetztem Einsteckzapfen 52 mit der Verzahnung des Antriebsrads 34 in Eingriff steht und somit durch das Antriebsrad 34 angetrieben ist.

Die Basiswelle 60 ist einerseits im Bereich des Endes 62 des Einsteckzapfens 52 über ein inneres Lager 66 und andererseits in der Werkzeughalterbasis 50 über ein äußeres Lager 68 drehbar gelagert und trägt einen innerhalb der Werkzeughalterbasis 50 angeordneten Rotor 70 eines elektrischen Generators 86, welcher von einem Stator 72 des elektrischen Generators 86 umschlossen ist, der stationär in der Werkzeughalterbasis 50 angeordnet ist.

Vorzugsweise umfasst die Werkzeughalterbasis 50 einen Gehäusekörper 74, welcher einen die Stützfläche 54 tragenden Boden 76 aufweist, über den sich Seitenwände 78 erheben und dabei einen Innenraum 80 umschließen, welcher auf einer dem Boden 76 abgewandten Seite durch einen Gehäusedeckel 82 eine Lageraufnahme 84 für das äußere Lager 68 der Basiswelle 60.

In dem Innenraum 80 sitzen dann der Stator 72 und von diesem umschlossen der Rotor 70 auf der Basiswelle 60.

Der Rotor 60 und der Stator 72 bilden insgesamt den in der Werkzeughalterbasis 50 angeordneten elektrischen Generator 86, der über die Basiswelle 60 durch das Antriebsrad 34 und die Antriebswelle 32, die einen mechanischen Antriebsstrang bilden, antreibbar ist.

Auf der Werkzeughalterbasis sitzt ein als Ganzes mit 90 bezeichneter Werkzeughalterkopf, in dessen Werkzeughalterkopfgehäuse 92 eine Werkzeugspindel 94 um eine Werkzeugachse 96 drehbar gelagert ist, wobei die Werkzeugspindel 94 noch eine Werkzeugaufnahme 98 aufweist, in welcher ein rotierend antreibbares Werkzeug 100 sitzt.

Die Werkzeugspindel 94 ist durch einen als Ganzes mit 102 bezeichneten und als Spindelmotor ausgebildeten Spindelantrieb antreibbar, welcher einen auf der Werkzeugspindel 94 unmittelbar sitzenden und koaxial zur Werkzeugachse 96 angeordneten Rotor 104 sowie einen in dem Werkzeughalterkopfgehäuse 92 angeordneten Stator 106 umfasst, wobei der Spindelantrieb 102 dabei vorzugsweise mit einem Umrichter als Hochfrequenzantrieb für die Werkzeugspindel 94 ausgebildet ist.

Durch den unmittelbar auf der Werkzeugspindel 94 sitzenden Rotor 104 ist dieser ebenfalls koaxial zur Werkzeugachse 96 gelagert und drehbar, so dass ein unmittelbarer Antrieb der Werkzeugspindel 94 über den Rotor 102 erfolgt, der die Möglichkeit eröffnet, die Werkzeugspindel 94 mit einer für Hochgeschwindigkeitsbearbeitung geeignete Drehzahl anzutreiben..

Besonders einfach lässt sich der Werkzeughalterkopf 90 dann an der Werkzeughalterbasis 50 montieren, wenn das Werkzeughalterkopfgehäuse 92 unmittelbar auf dem Gehäusedeckel 82 des Gehäusekörpers 74 der Werkzeughalterbasis 50 sitzt und mit diesem verbunden ist.

Vorzugsweise ist der Werkzeughalterkopf 90 drehfest mit der Werkzeughalterbasis 50 verbunden und damit in definierter Ausrichtung zu dieser angeordnet, so dass auch die Ausrichtung des Werkzeughalterkopfes 90, insbesondere mit der Werkzeugachse 96, über die Ausrichtung der Werkzeughalterbasis 50 relativ zum Trägerkopf 18 festlegbar und durch die Fixierung des Einsteckzapfens 52 in der Werkzeughalteraufnahme 20 für die Bearbeitung eines Werkstücks dauerhaft festlegbar ist.

Vorzugsweise erfolgt die Verbindung des Spindelmotors 102 mit dem elektrischen Generator 86 über ein Kabel 108, so dass in einfacher Weise auch die Orientierung des Werkzeughalterkopfes 90 beispielsweise durch geänderten Anbau an der Werkzeughalterbasis 50 variabel ist.

Der Vorteil des erfindungsgemäßen Werkzeugsystems ist darin zu sehen, dass durch den mechanischen Antriebsstrang, gebildet durch die Antriebswelle 32 und das Antriebsrad 34, in einfacher Weise der elektrische Generator 86 in der Werkzeughalterbasis 50 angetrieben werden kann und dieser dann seinerseits den Spindelmotor 102 zum Antreiben der Werkzeugspindel 94 speist, so dass keine mechanische Antriebsverbindung zwischen der Werkzeugspindel 94 und der Basiswelle 60 erforderlich ist.

Dies eröffnet bei der Festlegung des Aufbaus des Werkzeughalters 10 eine Vielzahl von Möglichkeiten der Anordnung des Werkzeughalterkopfes 90, ohne dass bei diesen unterschiedlichen Möglichkeiten der Anordnung jeweils eine andersartige Getriebelösung für einen mechanischen Antrieb der Werkzeugspindel 94 mittels der Basiswelle 60 erforderlich ist.

Ferner eröffnet die erfindungsgemäße Lösung die Möglichkeit, die Drehzahlverhältnisse zwischen dem elektrischen Generator 86 und dem Spindelantrieb 102 im Rahmen der konzeptionellen Auslegung in einfacher Weise frei variabel zu gestalten und somit Übersetzungen oder Untersetzungen vorzusehen, das heißt entweder einen Spindelantrieb 102 zu wählen, der ein hohes Drehmoment bei niedriger Drehzahl leistet oder einen Spindelmotor 102 zu wählen, welcher bei hoher Drehzahl ein niedrigeres Drehmoment als der Spindelantrieb 102 bei niedriger Drehzahl aufweist.

In Summe lassen sich somit bei dem ersten Ausführungsbeispiel der erfindungsgemäßen Lösung in einfacher Weise unterschiedliche geometrische Ausrichtungen der Werkzeugspindel 94 und somit des Werkzeugs 100 und gleichzeitig auch unterschiedliche Drehzahl- und Drehmomentverhältnisse festlegen.

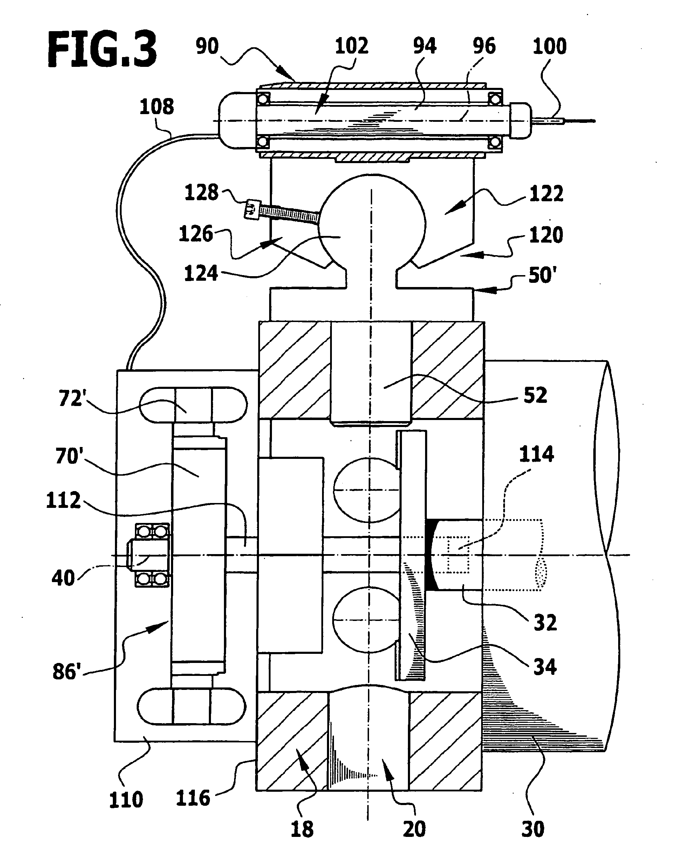

Bei einem zweiten Ausführungsbeispiel eines Werkzeugsystems, dargestellt in Fig. 3, sind diejenigen Elemente, die mit denen des ersten Ausführungsbeispiels identisch sind, mit denselben Bezugszeichen versehen, so dass hinsichtlich deren Beschreibung vollinhaltlich auf die Ausführungen zum ersten Ausführungsbeispiel des erfindungsgemäßen Werkzeugsystems Bezug genommen wird.

Im Gegensatz zum ersten Ausführungsbeispiel ist die Werkzeughalterbasis 50' lediglich mit dem Einsteckzapfen 52 versehen, jedoch nicht von der Basiswelle 60 durchsetzt und beinhaltet auch keinen elektrischen Generator 86.

Der elektrische Generator 86 sitzt vielmehr, wie in Fig. 3 dargestellt, in einem Generatorgehäuse 110, welches beispielsweise an dem Trägerkopf 18 montierbar ist, so dass eine Generatorwelle 112 fluchtend zu der Antriebswelle 32 angeordnet und koaxial zur Drehachse 40 drehbar ist.

Die Generatorwelle 112 ist dabei beispielsweise über ein Formschlusselement 114 direkt mit der Antriebswelle 32 oder alternativ dazu mit dem Antriebsrad 34 verbunden und somit durch diese antreibbar.

Auf der Generatorwelle 112 sitzt dann der Rotor 70', der von dem Stator 72' umschlossen ist, welcher seinerseits in dem Generatorgehäuse 110 angeordnet ist.

Vorzugsweise ist das Generatorgehäuse 110 dabei an einer Stirnseite 116 des Trägerkopfes 18 montiert, so dass die Generatorwelle 112 getriebelos von dem mechanischen Antriebsstrang, gebildet durch die Antriebswelle 32 und das Rad 34 antreibbar ist.

Von dem elektrischen Generator 86' führt ebenfalls das Versorgungskabel 108 zu dem Spindelantrieb 102, der im Werkzeughalterkopf 90 angeordnet ist.

Vorzugsweise ist der Spindelantrieb 102 in gleicher Weise aufgebaut wie beim ersten Ausführungsbeispiel, so dass hierzu keine weiteren Ausführungen erforderlich sind.

Im Gegensatz zum ersten Ausführungsbeispiel ist allerdings bei dem zweiten, in Fig. 3 dargestellten Ausführungsbeispiel der Werkzeughalterkopf 90 über ein einstellbares Verbindungselement 120 mit der Werkzeughalterbasis 50 verbunden und an dieser gehalten.

Beispielsweise ist dabei das Verbindungselement 120 als Gelenk 122 ausgebildet, mit einem, beispielsweise an der Werkzeughalterbasis 50 gehaltenen Gelenkkopf 124 und einer an dem Werkzeughalterkopf 90 vorgesehenen Gelenkkopfaufnahme 126 versehen, die eine Ausrichtung des Werkzeughalterkopfes 90 in verschiedenen Orientierungen zur Werkzeughalterbasis 50 zulassen, wobei allerdings das Gelenk 122 durch eine Fixiereinrichtung, beispielsweise eine Klemmschraube 128, in der jeweiligen Stellung beispielsweise kraftschlüssig festlegbar ist, so dass die Werkzeugachse 96 zumindest prinzipiell in beliebigen Orientierungen relativ zur Werkzeughalterbasis 50 ausrichtbar und in dieser ausgerichteten Stellung fixierbar ist.

Ferner wird bei diesem Ausführungsbeispiel dadurch, dass der elektrische Generator 86' an dem Trägerkopf 18 angeordnet ist, einerseits der Antrieb des elektrischen Generators 86' gegenüber dem ersten Ausführungsbeispiel noch weiter vereinfacht und andererseits wird dadurch das Werkzeugsystem raumsparend ausgebildet, insbesondere in radialer Richtung zur Schwenkachse 16.

Darüber hinaus erlaubt ein derartiger Generator 86', wie er beim zweiten Ausführungsbeispiel am Trägerkopf 18 zum Einsatz kommt, mit ein und demselben Generator 86' nicht nur einen Spindelantrieb 102 eines Werkzeughalters 10 anzutreiben, sondern beispielsweise mehrere Spindelantrieb 102 mehrerer an dem Trägerkopf 18 gehaltener Werkzeughalter 10 zu versorgen.

## Patentansprüche

1. Werkzeugsystem für angetriebene Werkzeuge (100) einer Werkzeugmaschine umfassend einen Werkzeughalter (10) mit einer Werkzeugspindel (94), welche durch einen elektrischen Spindelantrieb (102) antreibbar ist, mit einem mit dem elektrischen Spindelantrieb (102) gekoppelten elektrischen Generator (86), der durch einen mechanischen Antriebsstrang (32, 34) zum Antreiben der Werkzeugspindel (94) antreibbar ist,
**dadurch gekennzeichnet, dass** der Werkzeughalter (10) eine Werkzeughalterbasis (50) mit einem Einsteckzapfen (52) aufweist, welcher in eine Werkzeughatteraufhahme (20) eines eine Vielzahl von Werkzeughalteraufnahmen (20) aufweisenden Trägerkopfes (18) eines dem Werkzeugsystem zugehörigen Werkzeughalterträgers (12) einsteckbar ist und dass sich in der Werkzeughalterbasis (50) und dem Einsteckzapfen (52) eine Basiswelle (60) erstreckt, welche den innerhalb der Werkzeughalterbasis (50) angeordneten Rotor (70) des elektrischen Generators (86) trägt und welche an einem einem Innenraum (28) des Trägerkopfes (18) zugewandten Ende (62) des Einsteckzapfens (52) über eine lösbare mechanische Kupplung (34, 64) von dem zum Werkzeughalterträger (12) geführten, dem Werkzeugträgersystem zugehörigen mechanischen Antriebsstrang (32, 34) antreibbar ist.

2. Werkzeugsystem nach Anspruch 1, **dadurch gekennzeichnet, dass** der Spindelantrieb (102) mit einer Drehzahl läuft, die sich von der Drehzahl des elektrischen Generators (86) unterscheidet.

3. Werkzeugsystem nach Anspruch 1 oder 2, **dadurch gekennzeichnet, dass** die Basiswelle (60) an dem Ende (62) ein überstehendes Antriebsritzel (64) trägt und dass das Antriebsritzel (64) durch ein Antriebsrad (34) des mechanischen Antriebsstrangs (32, 34) antreibbar ist.

4. Werkzeugsystem nach einem der voranstehenden Ansprüche, **dadurch gekennzeichnet, dass** der Spindelantrieb (102, 140) koaxial zur Werkzeugspindel (94) angeordnet ist.

5. Werkzeugsystem nach einem der voranstehenden Ansprüche, **dadurch gekennzeichnet, dass** der Spindelantrieb (102, 140) die Werkzeugspindel (94) getriebefrei antreibt.

6. Werkzeugsystem nach Anspruch 5, **dadurch gekennzeichnet, dass** der Spindelantrieb (102, 140) die Werkzeugspindel (94) direkt antreibt.

7. Werkzeugsystem nach einem der voranstehenden Ansprüche, **dadurch gekennzeichnet, dass** der Spindelantrieb (102, 140) auf der Werkzeugspindel (94) sitzt.

8. Werkzeugsystem nach einem der voranstehenden Ansprüche, **dadurch gekennzeichnet, dass** der Spindelantrieb (102, 140) ein für Hochgeschwindigkeitsbearbeitung geeigneter Antrieb für die Werkzeugspindel (94) ist.

9. Werkzeugsystem nach einem der voranstehenden Ansprüche, **dadurch gekennzeichnet, dass** der Spindelantrieb (102, 140) und die Werkzeugspindel (94) in einem Werkzeughalterkopf (90) sitzen, der an einer an dem Werkzeughalterträger (12) fixierbaren Werkzeughalterbasis (50) angeordnet ist.

10. Werkzeugsystem nach Anspruch 9, **dadurch gekennzeichnet, dass** der Werkzeughalterkopf (90) relativ zur Werkzeughalterbasis (50) in unterschiedlicher Ausrichtung positionierbar ist.

11. Werkzeugsystem nach Anspruch 10, **dadurch gekennzeichnet, dass** der Werkzeughalterkopf (90) mittels eines einstellbaren Verbindungselements (122) an der Werkzeughalterbasis (50) gehalten ist.

12. Werkzeugsystem nach Anspruch 11, **dadurch gekennzeichnet, dass** das Verbindungselement (122) ein Gelenk ist.

## Claims

1. Tool system for driven tools (100) of a machine tool comprising a tool holder (10) with a tool spindle (94), which can be driven by an electric spindle drive (102), with an electric generator (86), which is coupled to the electric spindle drive (102) and can be driven by a mechanical drive train (32, 34) to drive the tool spindle (94), **characterised in that** the tool holder (10) has a tool holder base (50) with a plug-in journal (52), which can be plugged into a tool holder seating (20) of a support head (18) of a tool holder support (12) belonging to the tool system, said support head having a plurality of tool holder seatings (20), and that extending in the tool holder base (50) and the plug-in journal (52) is a base shaft (60), which bears the rotor (70) of the electric generator (86) arranged inside the tool holder base (50) and which can be driven at an end (62) of the plug-in journal (52) facing an interior (28) of the support head (18) by means of a releasable mechanical coupling (34, 64) of the mechanical drive train (32, 34) belonging to the tool system and guided to the tool holder support (12).

2. Tool system according to claim 1, **characterised in that** the spindle drive (102) runs at a rotational speed, which differs from the rotational speed of the electric generator (86).

3. Tool system according to claim 1 or 2, **characterised in that** the base shaft (60) bears a projecting drive pinion (64) on the end (62) and that the drive pinion (64) can be driven by a driving wheel (34) of the mechanical drive train (32, 34).

4. Tool system according to one of the preceding claims, **characterised in that** the spindle drive (102, 140) is arranged coaxially to the tool spindle (94).

5. Tool system according to one of the preceding claims, **characterised in that** the spindle drive (102, 140) drives the tool spindle (94) in a gear-free manner.

6. Tool system according to claim 5, **characterised in that** the spindle drive (102, 140) drives the tool spindle (94) directly.

7. Tool system according to one of the preceding claims, **characterised in that** the spindle drive (102, 140) is seated on the tool spindle (94).

8. Tool system according to one of the preceding claims, **characterised in that** the spindle drive (102, 140) is a drive for the tool spindle (94) suitable for high-speed machining.

9. Tool system according to one of the preceding claims, **characterised in that** the spindle drive (102, 140) and the tool spindle (94) are seated in a tool holder head (90), which is arranged on a tool holder base (50) that can be secured to the tool holder support (12).

10. Tool system according to claim 9, **characterised in that** the tool holder head (90) can be positioned in a different orientation relative to the tool holder base (50).

11. Tool system according to claim 10, **characterised in that** the tool holder head (90) is held on the tool holder base (50) by means of an adjustable connecting element (122).

12. Tool system according to claim 11, **characterised in that** the connecting element (122) is an articulation.

## Revendications

1. Système d'outillage pour outils commandés (100) dans une machine-outil, comprenant un porte-outil (10) avec une broche d'outil (94) qui peut être entraînée par une commande de broche électrique (102), avec un générateur électrique (86) couplé avec la commande de broche électrique (102) et qui peut être entraîné par une chaîne cinématique mécanique (32, 34) pour entraîner la broche d'outil (94), **caractérisé en ce que** le porte-outil (10) présente une base de porte-outil (50) avec une cheville d'emboîtement (52) qui peut être emboîtée dans un logement de porte-outil (20) d'une tête de support (18) présentant une pluralité de logements de porte-outil (20) d'un support de porte-outil (12) associé au système d'outillage, et **en ce que** dans la base de porte-outil (50) et la cheville d'emboîtement (52) s'étend un arbre de base (60) qui porte le rotor (70) du générateur électrique (86) disposé à l'intérieur de la base de porte-outil (50) et qui peut être entraîné au niveau d'une extrémité (62) de la cheville d'emboîtement (52) tournée vers un espace intérieur (28) de la tête de support (18), par l'intermédiaire d'un accouplement mécanique amovible (34, 64), par la chaîne cinématique mécanique (32, 34) amenée jusqu'au support de porte-outil (12) et associée au système d'outillage.

2. Système d'outillage selon la revendication 1, **caractérisé en ce que** la commande de broche (102) tourne à un régime qui est différent du régime du générateur électrique (86).

3. Système d'outillage selon la revendication 1 ou 2, **caractérisé en ce que** l'arbre de base (60) porte à l'extrémité (62) un pignon d'entraînement (64) en saillie et **en ce que** le pignon d'entraînement (62) peut être entraîné par une roue menante (34) de la chaîne cinématique mécanique (32, 34).

4. Système d'outillage selon l'une quelconque des revendications précédentes, **caractérisé en ce que** la commande de broche (102, 140) est disposée de façon coaxiale à la broche d'outil (94).

5. Système d'outillage selon l'une quelconque des revendications précédentes, **caractérisé en ce que** la commande de broche (102, 140) entraîne la broche d'outil (94) sans engrenage.

6. Système d'outillage selon la revendication 5, **caractérisé en ce que** la commande de broche (102, 140) entraîne la broche d'outil (94) directement.

7. Système d'outillage selon l'une quelconque des revendications précédentes, **caractérisé en ce que** la commande de broche (102, 140) repose sur la broche d'outil (94).

8. Système d'outillage selon l'une quelconque des revendications précédentes, **caractérisé en ce que** la commande de broche (102, 140) est un entraînement adapté à un traitement haute vitesse pour la broche d'outil (94).

9. Système d'outillage selon l'une quelconque des revendications précédentes, **caractérisé en ce que** la commande de broche (102, 140) et la broche d'outil (94) reposent dans une tête de porte-outil (90) qui est disposée sur une base de porte-outil (50) pouvant être fixée sur le support de porte-outil (12).

10. Système d'outillage selon la revendication 9, **caractérisé en ce que** la tête de porte-outil (90) peut être positionnée par rapport à la base de porte-outil (50) dans une orientation différente.

11. Système d'outillage selon la revendication 10, **caractérisé en ce que** la tête de porte-outil (90) est maintenue au moyen d'un élément de liaison ajustable (122) sur la base de porte-outil (50).

12. Système d'outillage selon la revendication 11, **caractérisé en ce que** l'élément de liaison (122) est une articulation.
